# EUROPEAN PATENT APPLICATION

(11) **EP 3 210 713 A1**
(43) Date of publication of application: **30.08.2017**
(21) Application number: 17155842.2
(22) Date of filing: 13.02.2017
(51) Int. Cl.: B23K 26/03, B22F 3/105, B29C 67/00, B23K 26/342, B23K 26/082

(54) **LASER POWER MONITORING IN ADDITIVE MANUFACTURING**

(30) Priority: 19.02.2016 US 201615048536
(71) Applicant: General Electric Company, Schenectady, NY 12345 (US)
(72) Inventor: Spears, Thomas Graham, West Chester, OH 45241 (US)
(74) Representative: Pöpper, Evamaria

(57) **Abstract**

A method of monitoring laser power in an additive manufacturing process in which a build beam (B) generated by a laser source (24) is used to selectively fuse or cure material to form a workpiece (W). The method includes: splitting off a predetermined percentage of the build beam (B) to define a sample beam (S), and directing the sample beam (S) to a sensor (58); using the sensor (58) to generate a signal proportional to the power of the sample beam (S); and scaling the signal from the sensor (58) to generate a laser power measurement representative of a power level of the build beam (B).

## Description

### BACKGROUND OF THE INVENTION

This invention relates generally to additive manufacturing, and more particularly to apparatus and methods for laser power monitoring and process control in additive manufacturing.

Additive manufacturing is a process in which material is built up layer-by-layer to form a component. Additive manufacturing is also referred to by terms such as "layered manufacturing," "reverse machining," "direct metal laser melting" (DMLM), and "3-D printing". Such terms are treated as synonyms for purposes of the present invention.

One problem with prior art additive manufacturing machines is that the actual laser power is not measured. Another problem is that when laser power is measured, the measurement process requires that the machine is "down" (i.e. not manufacturing a part). This contributes to a reduction in machine utilization.

### BRIEF DESCRIPTION OF THE INVENTION

At least one of these problems is addressed by a method of monitoring laser power in an additive manufacturing process.

According to one aspect of the technology described herein, a method is provided of monitoring laser power in an additive manufacturing process in which a build beam generated by a laser source is used to selectively fuse or cure material to form a workpiece. The method includes: splitting off a predetermined percentage of the build beam to define a sample beam, and directing the sample beam to a sensor; using the sensor to generate a signal proportional to the power of the sample beam; and scaling the signal from the sensor to generate a laser power measurement representative of a power level of the build beam.

According to another aspect of the technology described herein, a method is provided of making a workpiece. The method includes: depositing material in a build chamber; directing a build beam generated by a laser source to selectively fuse or cure the material in a pattern corresponding to a cross-sectional layer of the workpiece; splitting off a predetermined percentage of the build beam to define a sample beam, and directing the sample beam to a sensor; using the sensor to generate a signal proportional to the power of the sample beam; scaling the signal from the sensor to generate a laser power measurement representative of a power level of the build beam; and controlling at least one aspect of making the workpiece in response to the laser power measurement.

According to another aspect of the technology described herein, an apparatus for making a workpiece includes: a build chamber; a laser source operable to generate a build beam; the beam steering apparatus operable to direct the build beam so as to selectively fuse or cure material in the build chamber, in a pattern corresponding to a cross-sectional layer of the workpiece; a beam splitter disposed between the laser source and the beam steering apparatus, beam splitter operable to split off a predetermined percentage of the build beam to define a sample beam; and a sensor positioned to receive the sample beam, the sensor operable to generate a signal proportional to the power of the sample beam.

### BRIEF DESCRIPTION OF THE DRAWINGS

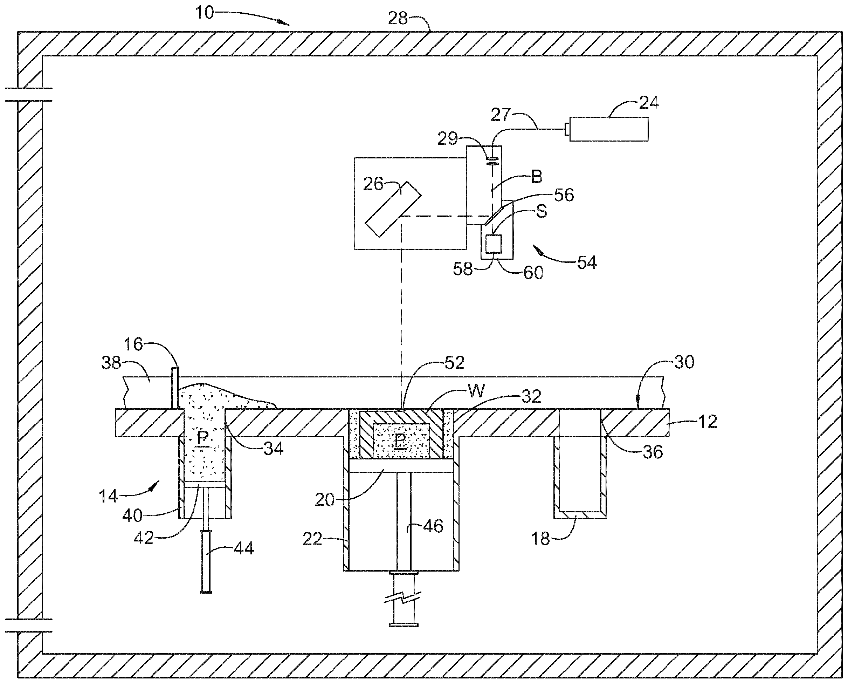

The invention may be best understood by reference to the following description taken in conjunction with the accompanying drawing figure which is a schematic, partially-sectioned front elevation view of an exemplary additive manufacturing machine.

### DETAILED DESCRIPTION OF THE INVENTION

Referring to the single drawing, illustrated schematically is an additive manufacturing machine 10 suitable for carrying out an additive manufacturing method. Basic components of the machine 10 include a table 12, a powder supply 14, a recoater 16, an overflow container 18, a build platform 20 surrounded by a build chamber 22, a laser source 24, and a beam steering apparatus 26, all surrounded by a housing 28. Each of these components will be described in more detail below.

The table 12 is a rigid structure defining a planar worksurface 30. The worksurface 30 is coplanar with and defines a virtual workplane. In the illustrated example it includes a build opening 32 communicating with the build chamber 22 and exposing the build platform 20, a supply opening 34 communicating with the powder supply 14, and an overflow opening 36 communicating with the overflow container 18.

The recoater 16 is a rigid, laterally-elongated structure that lies on the worksurface 30. It is connected to an actuator 38 operable to selectively move the recoater 16 along the worksurface 30. The actuator 38 is depicted schematically in the figure, with the understanding devices such as pneumatic or hydraulic cylinders, ballscrew or linear electric actuators, and so forth, may be used for this purpose.

The powder supply 14 comprises a supply container 40 underlying and communicating with the supply opening 34, and an elevator 42. The elevator 42 is a plate-like structure that is vertically slidable within the supply container 40. It is connected to an actuator 44 operable to selectively move the elevator 42 up or down. The actuator 44 is depicted schematically in the figure, with the understanding that devices such as pneumatic or hydraulic cylinders, ballscrew or linear electric actuators, and so forth, may be used for this purpose. When the elevator 42 is lowered, a supply of powder "P" of a desired composition (for example, metallic, ceramic, and/or organic powder) may be loaded into the supply container 40. When the elevator 42 is raised, it exposes the powder P above the worksurface 30. Other types of powder supplies may be used; for example powder may be dropped into the build chamber 22 by an overhead device (not shown).

The build platform 20 is a plate-like structure that is vertically slidable below the build opening 32. It is connected to an actuator 46 operable to selectively move the build platform 20 up or down. The actuator 46 is depicted schematically in the figure, with the understanding that devices such as pneumatic or hydraulic cylinders, ballscrew or linear electric actuators, and so forth, may be used for this purpose. When the build platform 20 is lowered into the build chamber 22 during a build process, the build chamber 22 and the build platform 20 collectively surround and support a mass of powder P along with any components being built. This mass of powder is generally referred to as a "powder bed", and this specific category of additive manufacturing process may be referred to as a "powder bed process".

The overflow container 18 underlies and communicates with the overflow opening 36, and serves as a repository for excess powder P.

The laser source 24 may comprise any device operable to generate a laser beam "B" of suitable power and other operating characteristics to melt and fuse the powder P during the build process, described in more detail below.

The beam steering apparatus 26 may include one or more mirrors, prisms, and/or lenses and provided with suitable actuators, and arranged so that the beam B can be focused to a desired spot size and steered to a desired position in plane coincident with the worksurface 30. For purposes of convenient description, this plane may be referred to as a X-Y plane, and a direction perpendicular to the X-Y plane is denoted as a Z-direction (X, Y, and Z being three mutually perpendicular directions). The beam B may be referred to herein as a "build beam". The illustrated example, laser energy is transferred to the beam steering apparatus 26 through an optical fiber 27 and a conventional collimator 29.

The housing 28 serves to isolate and protect the other components of the machine 10. During a build process described below, the housing 28 may be provided with a flow of an appropriate shielding gas which, among other functions, excludes oxygen from the build environment.

An exemplary basic build process for a workpiece W using the apparatus described above is as follows. The build platform 20 is moved to an initial high position. The build platform 20 is lowered below the worksurface 30 by a selected layer increment. The layer increment affects the speed of the additive manufacturing process and the resolution of the workpiece W. As an example, the layer increment may be about 10 to 50 micrometers (0.0003 to 0.002 in.). Powder "P" is then deposited over the build platform 20 for example, the elevator 42 of the supply container 40 may be raised to push powder through the supply opening 34, exposing it above the worksurface 30. The recoater 16 is moved across the worksurface to spread the raised powder P horizontally over the build platform 20. Any excess powder P drops through the overflow opening 36 into the overflow container 18 as the recoater 16 passes from left to right. Subsequently, the recoater 16 may be moved back to a starting position. The leveled powder P may be referred to as a "build layer" and the exposed upper surface thereof may be referred to as a "build surface".

The laser source 24 is used to melt a two-dimensional cross-section or layer of the workpiece W being built. The laser source 24 emits the beam B and the beam steering apparatus 26 is used to steer a focal spot of the beam B over the exposed powder surface in an appropriate pattern. A small portion of exposed layer of the powder P surrounding the focal spot, referred to herein as a "weld pool" 52 is heated by the beam B to a temperature allowing it to sinter or melt, flow, and consolidate. As an example, the weld pool 52 may be on the order of 100 micrometers (0.004 in.) wide. This step may be referred to as fusing the powder P.

The build platform 20 is moved vertically downward by the layer increment, and another layer of powder P is applied in a similar thickness. The laser source 24 again emits the beam B and the beam steering apparatus 26 is used to steer the focal spot of the beam B over the exposed powder surface in an appropriate pattern. The exposed layer of the powder P is heated by the beam B to a temperature allowing it to sinter or melt, flow, and consolidate both within the top layer and with the lower, previously-solidified layer.

This cycle of moving the build platform 20, applying powder P, and then directed energy fusing the powder P is repeated until the entire workpiece W is complete.

The machine 10 and its operation are a representative example of a "powder bed machine". It will be understood that the principles described herein are applicable to other types of additive manufacturing machines. For example, a known type of additive manufacturing machine operates by using a laser to selectively cure a layer of liquid resin to form a workpiece. This process may be referred to as stereolithography ("SLA").

During the build process, improper or inconsistent beam power is undesirable. If the beam power is too high or low, it can produce inconsistent fusing results. Accordingly, the machine 10 may be provided with a laser power monitoring apparatus 54 which is operable to measure laser power during operation of the machine 10.

The laser power monitoring apparatus 54 includes a beam splitter 56 which is operable to split off a sample beam "S" from the beam B and direct the sample beam S to a sensor 58. The sample beam S represents a predetermined fixed percentage of the power of the beam B.

As used herein, the term "beam splitter" includes any device operable to direct the majority of the beam B along the primary beam path and to divert a controlled portion of the beam. Nonlimiting examples of devices which may be used as beam splitters include dielectric mirrors, prisms, and metallic mirrors. For example, a metallic mirror may be provided which reflects the majority of the light incident thereupon, but which also transmits some incident light therethrough.

The sensor 58 may be any device which is operable to receive the sample beam S and to generate a signal proportional to the power of the sample beam S. nonlimiting examples of suitable sensors include semiconductor-based detectors (e.g. photodiodes or photodiodes arrays) and photomultiplier tubes. The sensor 58 is positioned so as to receive the sample beam S from the beam splitter 56.

An enclosure 60 may be provided surrounding the beam splitter 56 and the sensor 58 to prevent the escape of laser radiation.

In the illustrated example, the beam splitter 56 is placed downstream of the collimator 29. The beam splitter 56 turns the majority of the beam B through 90° and directs it to the beam steering apparatus 26. The sample beam S is directed to the sensor 58. Other physical arrangements of the beam splitter 56 and the sensor 58 are possible. For example, the beam splitter 56 could be positioned upstream of the collimator 29.

The fraction of the build beam B split off to constitute the sample beam S may be determined based on the sensitivity and resolution of the sensor S. It is generally desirable to minimize the energy in the sample beam S as this reduces the power available in the build beam B. For example, if the laser source 24 has a nominal output of 200 W, and a split of 1% is used, this would result in 198 W delivered to the beam steering apparatus 26 and 2 W delivered to the sensor 58.

The output signal of the sensor 58 may be scaled as required to appropriately represent the power of the build beam B. In the above-noted example where the sample beam S is 1% of laser power, the sensor's output signal would be scaled by a factor of 100 to represent the actual power of the build beam B. if necessary or desirable, further scaling or adjustment to the output signal could be made to compensate for the power lost in the sample beam S and to thereby improve the accuracy of the beam power measurement. In general, the additive manufacturing process is sensitive to a variation in laser power of approximately 1%. It is noted that sensors 58 are commercially available which can detect power levels of small fractions of a Watt with an accuracy of 1% of scale. Accordingly it is believed that the split or amount of leakage to the sensor 58 could be extremely small, for example 1/100 of 1% of the nominal power of the laser source 24.

Laser power data obtained from the sensor 58 may be used for various purposes. For example, it may be used for machine qualification. In this process, the laser power data would be used to characterize the laser power before the machine 10 is used for the first time. This gives a baseline for subsequent measurements, and also gives the user information about the machine 10. For example, a specific machine 10 may be known to have a particular laser power output which may require higher than average laser power settings to achieve acceptable results during the build process.

As another example, the laser power data may be used for machine calibration. In this process, the sensor 58 described above would be used to characterize the laser power at regular intervals, for example every three to six months. The series of laser power data collections could be compared to the baseline laser power data and/or to each other. The laser power data can also be compared to a rated power of the laser source 24. These comparisons could help identify a change in the machine characteristics. Corrective action could take the form of machine maintenance or repairs.

A monitoring method may include establishing one or more predetermined limits for the laser power (relative to the selected, desired, or commanded power level), referred to herein as "laser power limits", for example a minimum power, or a maximum power.

A monitoring method may include taking a discrete action in response to one or more laser power limits being exceeded, such as providing a visual or audible alarm to a local or remote operator.

A monitoring method may include pausing or stopping the build process in response to one or more laser power limits being exceeded. This is another example of a discrete action.

A monitoring method may include real-time control of laser power using methods such as: statistical process control, feedforward control, feedback control using proportional, proportional-integral, or proportional-integral-derivative control logic, neural network control algorithms, or fuzzy logic control algorithms.

The operation of the apparatus described above may be controlled, for example, by software running on one or more processors embodied in one or more devices such as a programmable logic controller ("PLC") or a microcomputer (not shown). Such processors may be coupled to the sensors and operating components, for example, through wired or wireless connections. The same processor or processors may be used to retrieve and analyze sensor data, for statistical analysis, and for feedback control.

The method described herein has several advantages over the prior art. In particular, it allows consistent beam power while minimizing interruption of the build process. This has the potential to reduce workpiece variation and scrap rate, improve part quality, and monitor the condition of the machine 10.

The foregoing has described an apparatus and method for beam power monitoring in an additive manufacturing process. All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying potential points of novelty, abstract and drawings), or to any novel one, or any novel combination, of the steps of any method or process so disclosed.

Various aspects and embodiments of the present invention are defined by the following numbered clauses:
1. A method of monitoring laser power in an additive manufacturing process in which a build beam generated by a laser source is used to selectively fuse or cure material to form a workpiece, the method comprising:
   splitting off a predetermined percentage of the build beam to define a sample beam, and directing the sample beam to a sensor;
   using the sensor to generate a signal proportional to the power of the sample beam; and
   scaling the signal from the sensor to generate a laser power measurement representative of a power level of the build beam.
2. The method of clause 1, wherein the build beam is split via transmission through a reflective optic.
3. The method of clause 1, further comprising comparing the laser power measurement to a rated power of the laser source.
4. The method of clause 1, further comprising controlling at least one aspect of the additive manufacturing process in response to the laser power measurement.
5. The method of clause 4, wherein the step of controlling includes taking a discrete action in response to the laser power measurement exceeding one or more predetermined laser power limits.
6. The method of clause 5, wherein the one or more predetermined laser power limits includes a maximum difference between the laser power measurements and a desired laser power.
7. The method of clause 3, wherein the step of controlling includes changing at least one process parameter of the additive manufacturing process.
8. The method of clause 1, wherein the sensor comprises a solid state semiconductor detector.
9. The method of clause 1, wherein the sensor comprises a photomultiplier tube.
10. A method of making a workpiece, comprising:
   depositing material in a build chamber;
   directing a build beam generated by a laser source to selectively fuse or cure the material in a pattern corresponding to a cross-sectional layer of the workpiece;
   splitting off a predetermined percentage of the build beam to define a sample beam, and directing the sample beam to a sensor;
   using the sensor to generate a signal proportional to a power of the sample beam;
   scaling the signal from the sensor to generate a laser power measurement representative of a power level of the build beam; and
   controlling at least one aspect of making the workpiece in response to the laser power measurement.
11. The method of clause 10, further comprising repeating in a cycle the steps of depositing and fusing to build up the workpiece in a layer-by layer fashion.
12. The method of clause 10, wherein the step of controlling includes taking a discrete action in response to the laser power measurement exceeding one or more predetermined laser power limits.
13. The method of clause 12, wherein one or more of the predetermined laser power limits include a maximum difference between actual laser power and a desired laser power.
14. The method of clause 10, further comprising comparing the laser power measurement to a rated power of the laser source.
15. The method of clause 10, wherein the build beam is split via transmission through a reflective optic.
16. The method of clause 10, wherein the sensor comprises a solid state semiconductor detector.
17. The method of clause 10, wherein the sensor comprises a photomultiplier tube.
18. An apparatus for making a workpiece, comprising:
   a build chamber;
   a laser source operable to generate a build beam;
   a beam steering apparatus operable to direct the build beam so as to selectively fuse or cure material in the build chamber, in a pattern corresponding to a cross-sectional layer of the workpiece;
   a beam splitter disposed between the laser source and the beam steering apparatus, the beam splitter operable to split off a predetermined percentage of the build beam to define a sample beam; and
   a sensor positioned to receive the sample beam, the sensor operable to generate a signal proportional to the power of the sample beam.
19. The apparatus of claim 18, wherein the beam splitter comprises a dielectric mirror, a prism, or a metallic mirror.

## Claims

1. A method of monitoring laser power in an additive manufacturing process in which a build beam (B) generated by a laser source (24) is used to selectively fuse or cure material to form a workpiece (W), the method comprising:
splitting off a predetermined percentage of the build beam (B) to define a sample beam (S), and directing the sample beam to a sensor (58);
using the sensor (58) to generate a signal proportional to the power of the sample beam (S); and
scaling the signal from the sensor (58) to generate a laser power measurement representative of a power level of the build beam (B).

2. The method of claim 1, wherein the build beam (B) is split via transmission through a reflective optic (56).

3. The method of claim 1, further comprising comparing the laser power measurement to a rated power of the laser source (24).

4. The method of claim 1, further comprising controlling at least one aspect of the additive manufacturing process in response to the laser power measurement.

5. The method of claim 4, wherein the step of controlling includes taking a discrete action in response to the laser power measurement exceeding one or more predetermined laser power limits.

6. The method of claim 5, wherein the one or more predetermined laser power limits includes a maximum difference between the laser power measurements and a desired laser power.

7. The method of claim 3, wherein the step of controlling includes changing at least one process parameter of the additive manufacturing process.

8. The method of claim 1, wherein the sensor (58) comprises a solid state semiconductor detector.

9. The method of claim 1, wherein the sensor (58) comprises a photomultiplier tube.

10. An apparatus for making a workpiece, comprising:
a build chamber (22);
a laser source (24) operable to generate a build beam (B);
a beam steering apparatus (26) operable to direct the build beam (B) so as to selectively fuse or cure material (P) in the build chamber (22), in a pattern corresponding to a cross-sectional layer of the workpiece (W);
a beam splitter (56) disposed between the laser source (24) and the beam steering apparatus (26), the beam splitter (56) operable to split off a predetermined percentage of the build beam (B) to define a sample beam (S); and
a sensor (58) positioned to receive the sample beam (S), the sensor (58) operable to generate a signal proportional to the power of the sample beam (S).

11. The apparatus of claim 10, wherein the beam splitter (56) comprises a dielectric mirror, a prism, or a metallic mirror.
